# EUROPEAN PATENT SPECIFICATION

(11) **EP 0 479 135 B1**
(45) Date of publication and mention of the grant of the patent: **02.09.1998**
(21) Application number: 91116447.3
(22) Date of filing: 26.09.1991
(51) Int. Cl.: H04N 5/93

(54) **Image signal processing device**
Vorrichtung zum Verarbeiten eines Bildsignals
Dispositif de traitement de signal d'image

(30) Priority: 29.09.1990 JP 261665/90; 29.09.1990 JP 261666/90
(43) Date of publication of application: 08.04.1992
(73) Proprietor: CANON KABUSHIKI KAISHA, Tokyo (JP)
(72) Inventor: Tomotaka, Muramoto, c/o Canon Kabushiki Kaisha, Ohta-ku, Tokyo (JP)
(74) Representative: Pellmann, Hans-Bernd, Dipl.-Ing.

(56) References cited:
- EP-A- 418 901
- US-A- 3 029 306
- US-A- 4 121 242
- US-A- 4 959 732
- PATENT ABSTRACTS OF JAPAN vol. 009, no. 136 (E-320)12 June 1985 & JP-A-60 018 074 ( NIHON KOUGAKU KOGYO KABUSHIKI KAISHA ) 30 January 1985
- PATENT ABSTRACTS OF JAPAN vol. 014, no. 374 (E-964)13 August 1990 & JP-A-2 135 995 ( SONY CORPORATION ) 24 May 1990
- PATENT ABSTRACTS OF JAPAN vol. 009, no. 095 (E-310)24 April 1985 & JP-A-59 221 189 ( SONY KABUSHIKI KAISHA ) 12 December 1984

## Description

### Background of the Invention:

### Field of the Invention:

This invention relates to an image signal processing device for processing image signals.

### Description of the Related Art:

An electronic still video system which is arranged to record a still image signal on a recording medium such as a magnetic disc and to reproduce the recorded still image signal from the recording medium has been known among other image signal processing devices for processing image signals.

In the electronic still video system, one-field amount of the still image signal is recorded in one recording track on the magnetic disc. One-frame amount of the still image signal is obtained from the one-field amount of the still image signal by repeatedly reproducing the still image signal from one and the same recording track. This mode of reproduction is called "field reproduction".

However, when the field reproduction is performed, a discontinuity arises in the phase of a horizontal synchronizing (hereinafter referred to as sync) signal at a PG point on the magnetic disc, i.e., at a point 7H ± 2H ("H" represents one horizontal sync period) before a vertical sync signal which is recorded in the track on the magnetic disc. To compensate for such a discontinuity of phase, it has been practiced to delay one-field amount of the still image signal reproduced from the magnetic disc by a 1/2 H period for every other field period. This compensation process is called a skew compensation process.

Further, in cases where a normal sync signal is not obtainable from the still image signal recorded on the magnetic disc, it has been also practiced to replace the abnormal sync signal which is included in the reproduced still image signal with a normal sync signal which is formed by a sync signal generator or the like disposed on the side of a reproducing apparatus of the system.

However, when performing the skew compensation process and the sync signal replacing process in the conventional image signal processing device, these processes must be controlled according to whether the one-field amount of the still image signal reproduced from the magnetic disc is the still image signal of an odd-number field or of an even-number field. This control necessitates the use of a discrimination circuit for making a discrimination between the odd-number field and the even-number field for the one-field amount of the still image signal reproduced from the magnetic disc. Therefore, the necessity for the discrimination circuit has complicated the arrangement of the sync signal generator and thus hindered cost-reducing efforts.

The skew compensation process has heretofore been performed in one of the following three methods:

In the first method: The skew compensation process is performed by alternately outputting, for every other field period, a reproduced still image signal which is not delayed 1/2 H period and a reproduced still image signal which is delayed 1/2 H period, without replacing a composite sync signal (consisting of the horizontal and vertical sync signals) which is included in the still image signal reproduced.

In the second method: The skew compensation process is carried out by replacing the composite sync signal included in the reproduced still image signal with a composite sync signal which is generated by a sync signal generator or the like and has no discontinuity of phase.

In the third method: The skew compensation process is performed by replacing a sync signal which is included in the reproduced still image signal for a period including a PG point and the vertical sync signal (approximately corresponding to a vertical blanking period) with a sync signal which is generated by a sync signal generator or the like and has no discontinuity of phase.

However, the conventional methods have presented the following problems:

In accordance with the first method, since the composite sync signal included in the still image signal is not replaced, a discontinuity takes place in the phase of the sync signal at a part where the field of the still image signal changes from an odd-number field to an even-number field. Therefore, in cases where another timing signal is arranged to be generated, for example, by counting the sync signal, the other timing signal might be generated at a wrong timing.

In the case of the second method, the composite sync signal which is included in the reproduced image signal is replaced with a composite sync signal which is generated by a sync signal generator or the like. Therefore, the phase relation of the image part of the reproduced still image signal to the composite sync signal part might deviate from a correct phase relation. The deviation then causes jitters in the reproduced still image.

In accordance with the third method, the sync signal included in the reproduced still image signal for the period including the PG point and the vertical sync signal is replaced with the sync signal generated by a sync signal generator. Therefore, the sync signal part and the image part of the still image signal are kept in a correct phase relation for a period corresponding to an effective picture plane, and thus no jitters take place in the horizontal direction of the image plane. However, there occurs a deviation in the vertical direction of the image plane. This deviation then results in a sway.

Furthermore, from the Patent Abstracts of Japan, Vol. 009, No. 136 (E-320), June 12, 1985, a processing circuit of a field signal is known, wherein skews are eliminated by replacing a fixed period including the vertical synchronizing period of the video signal within a vertical blanking period of the video signal containing artificial horizontal synchronizing signals of different cycles. The skew elimination relies on artificial horizontal synchronizing signals of different cycles based on combined outputs of bistable multivibrators whose output signals are linked to a TV-AFC. It is then switched between a reproduced video signal and the said horizontal synchronizing signals.

### Summary of the Invention:

It is a general object of this invention to provide an image signal processing device which is capable of solving the problems described in the foregoing.

It is a more specific object of the invention to provide an image signal processing device which is capable of keeping the continuity of the phase of a sync signal included in an image signal without necessitating any discriminating process for the field of the image signal.

It is another object of this invention to provide an image signal processing device whereby an image signal can be processed and produced with a sync signal which is included in the image signal retaining the continuity of its phase and with no jitters or the like taking place in the image signal.

According to the present invention, the aforementionned objects are achieved by a video signal reproducing device as defined in claim 1.

The above and other objects and features of the invention will become apparent from the following detailed description of embodiments thereof taken in conjunction with the accompanying drawings.

### Brief Description of the Drawings:

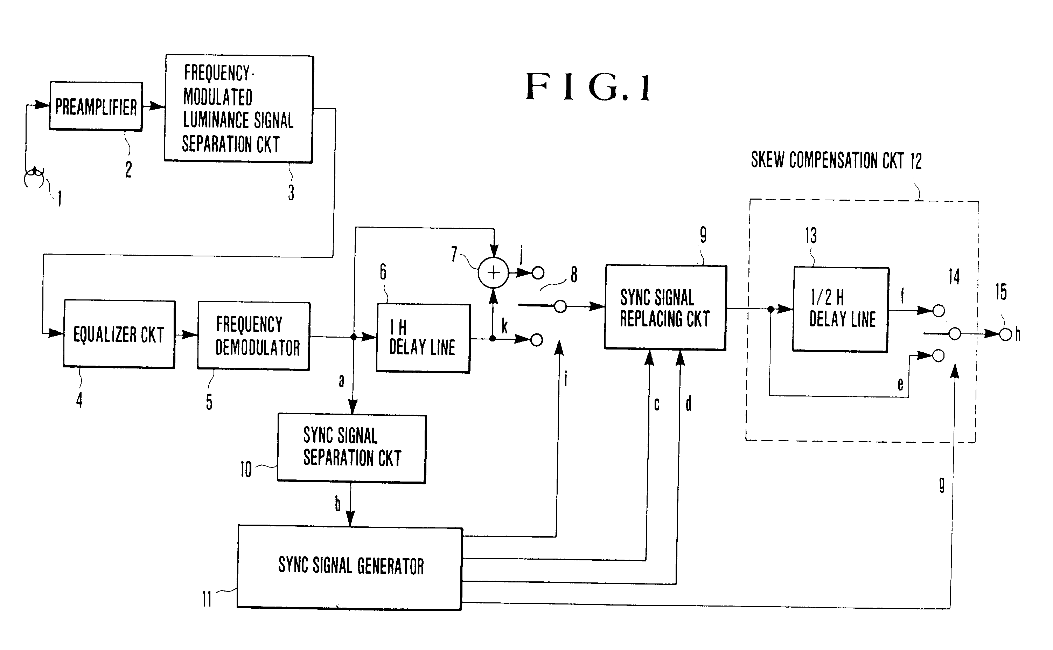

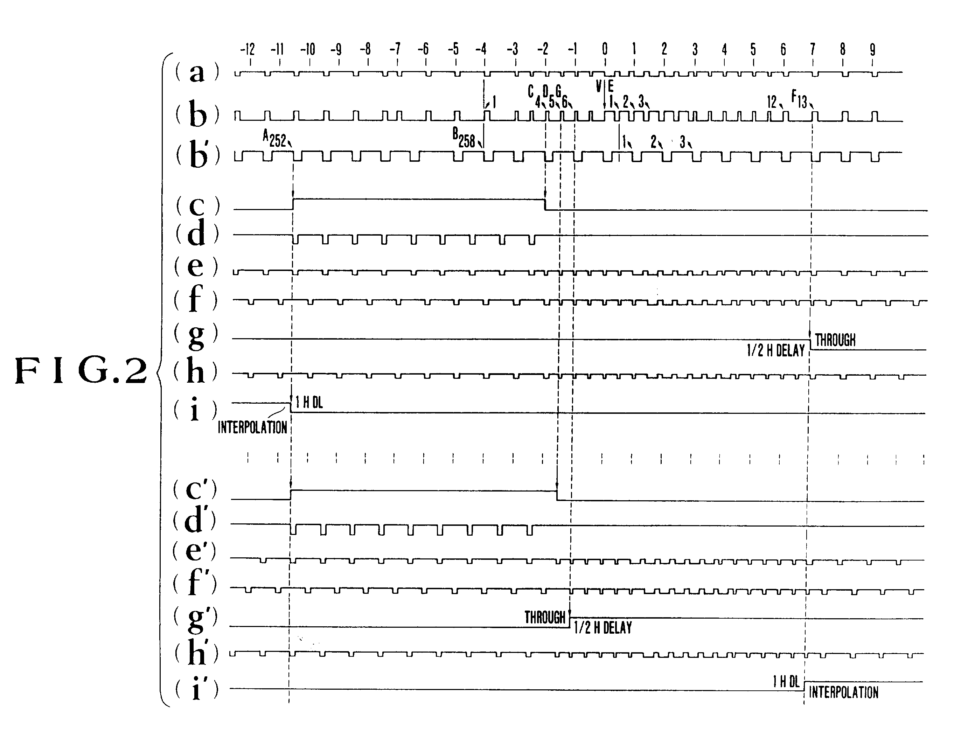

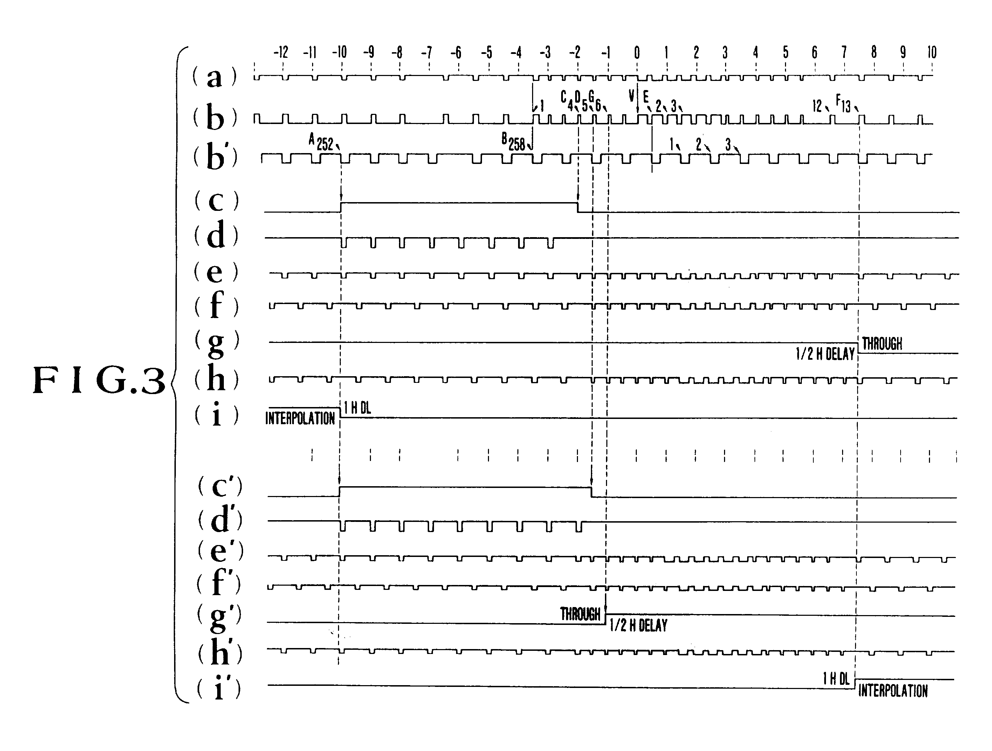

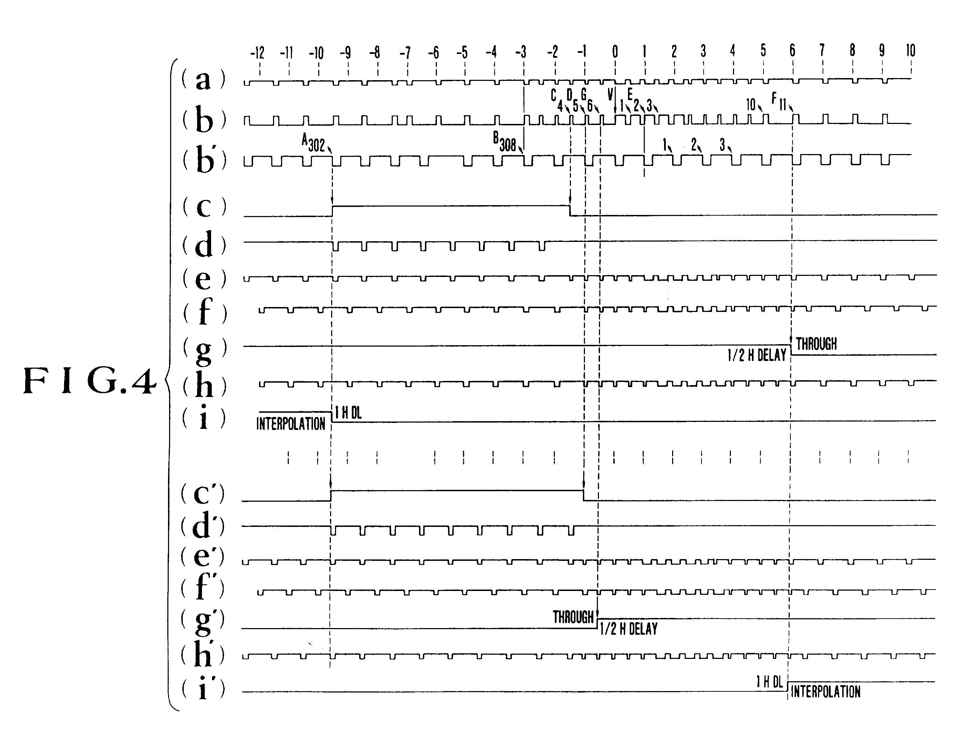

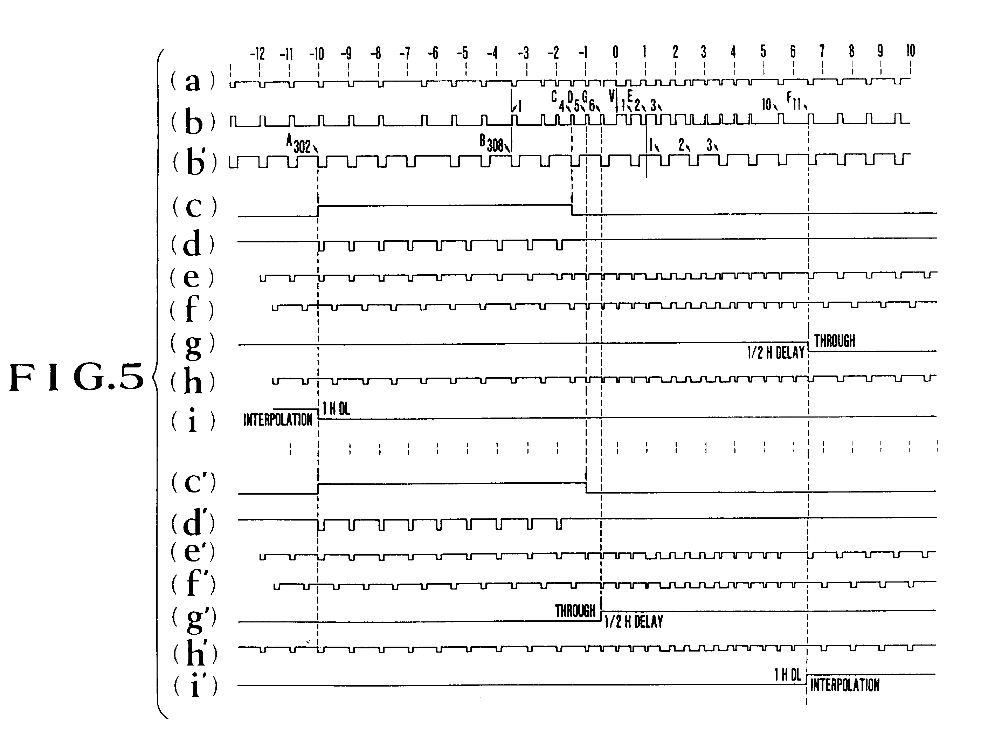

Fig. 1 is a block diagram showing in outline the arrangement of the reproducing apparatus of an electronic still video system to which this invention is applied as a first embodiment thereof. Figs. 2 and 3 are timing charts showing a first example of operation of the first embodiment by using the waveforms of signals obtained at the various parts of Fig. 1. Figs. 4 and 5 are timing charts showing a second example of operation of the first embodiment by using the waveforms of signals obtained at the various parts of Fig. 1.

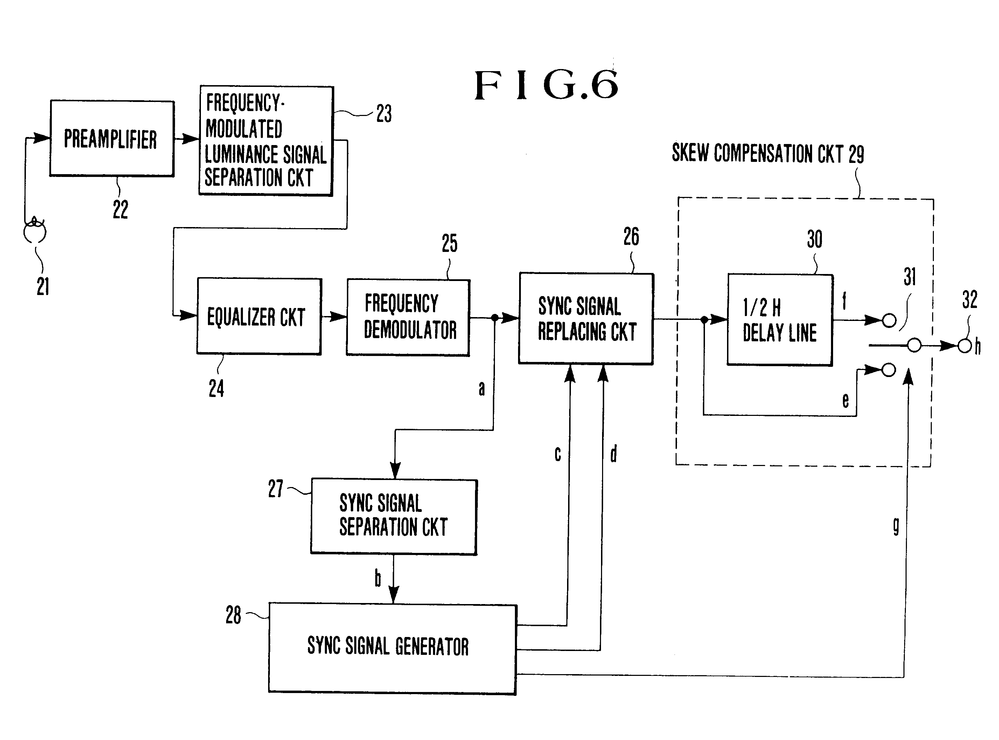

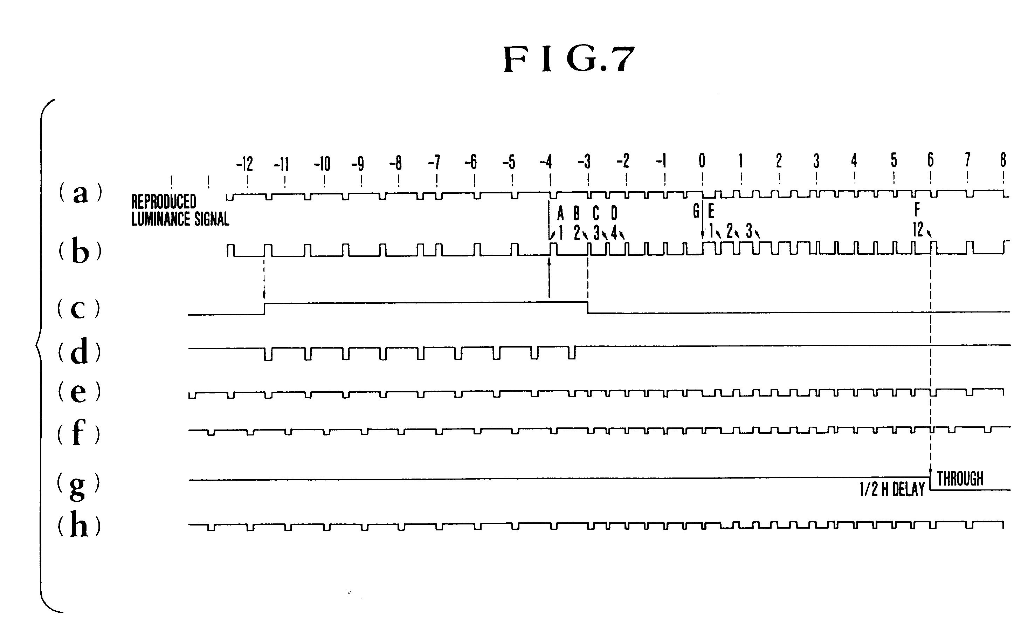

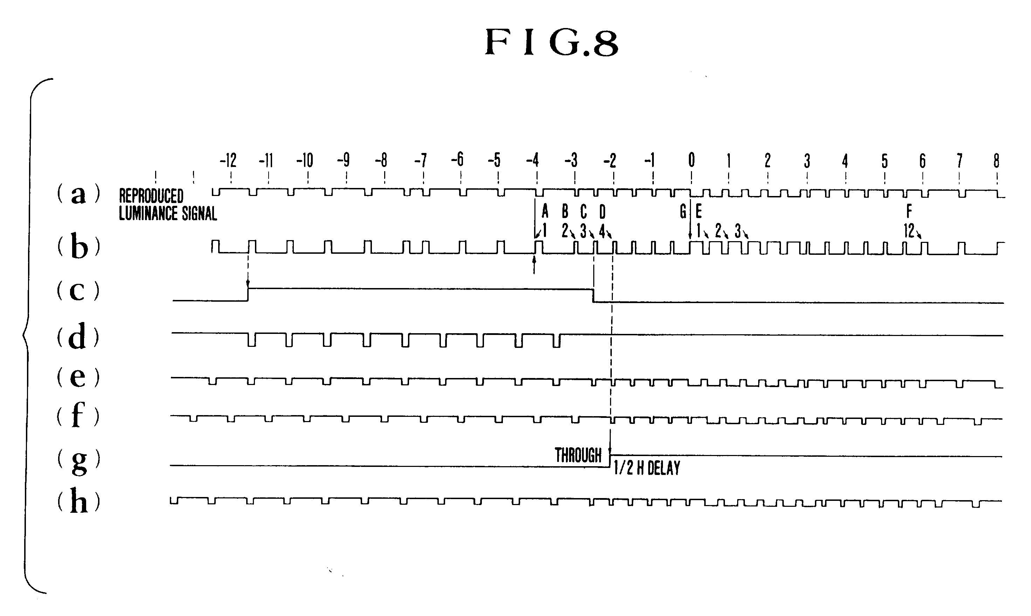

Fig. 6 is a block diagram showing in outline the arrangement of the reproducing apparatus of an electronic still video system to which this invention is applied as a second embodiment thereof. Figs. 7 and 8 are timing charts showing the operation of the second embodiment by using the waveforms of signals obtained at the various parts of Fig. 6.

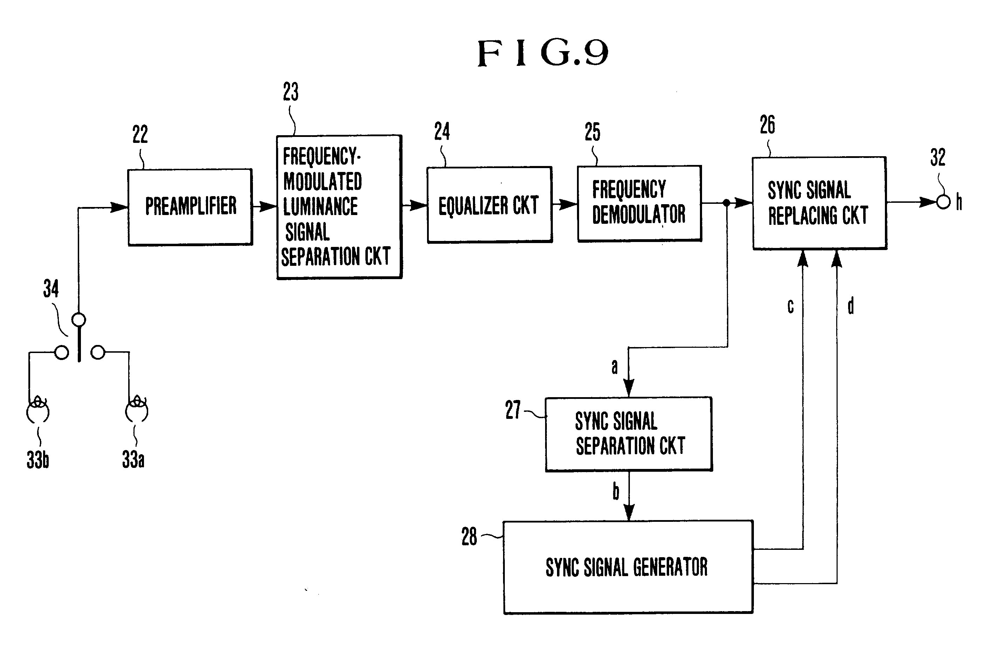

Fig. 9 is a block diagram showing in outline the arrangement of the reproducing apparatus of an electronic still video system to which this invention is applied as a third embodiment thereof.

### Detailed Description of the Preferred Embodiments:

The following describes this invention through embodiments thereof:

Fig. 1 shows in outline the arrangement of the reproducing apparatus of an electronic still video system arranged as a first embodiment of this invention.

Referring to Fig. 1, a magnetic head 1 is arranged to reproduce a still image signal recorded on a magnetic disc which is not shown. A preamplifier 2 is arranged to amplify the signal reproduced by the magnetic head 1. A frequency-modulated luminance signal separation circuit 3 is arranged to separate a frequency-modulated luminance signal from the signal output from the preamplifier 2. An equalizer circuit 4 is arranged to compensate (or correct) the frequency characteristic of the frequency-modulated luminance signal separated by the frequency-modulated luminance signal separation circuit 3. A frequency demodulator 5 is arranged to frequency-demodulate the frequency-modulated luminance signal output from the equalizer circuit 4. A 1H delay line 6 is arranged to delay the luminance signal output from the frequency demodulator 5 as much as one H period. An adder 7 is arranged to add together the luminance signal output from the frequency demodulator 5 and the luminance signal output from the 1H delay line 6 and to obtain a mean value of them. A change-over switch 8 is arranged to selectively output the luminance signal output from the 1H delay line 6 or the luminance signal output from the adder 7 by switching them from one over to the other. A sync signal replacing circuit 9 is arranged to replace a sync signal which is included in the luminance signal output from the change-over switch 8 with a sync signal which is output from a sync signal generator 11. A sync signal separation circuit 10 is arranged to separate the sync signal from the luminance signal output from the frequency demodulator 5. The above-stated sync signal generator 11 is arranged to generate the sync signal which is used for replacement by the sync signal replacing circuit 9 and other various timing signals in synchronizm with the sync signal separated by the sync signal separation circuit 10. A skew compensation circuit 12 includes a 1/2 H delay line 13 which is arranged to delay an input signal as much as a 1/2 H period and a change-over switch 14 which is arranged to switch over, for every field period, the signal delayed 1/2 H period by the 1/2 H delay line 13 and the signal which is not delayed. An output terminal 15 is arranged to output the luminance signal thus processed.

The device which is arranged as shown in Fig. 1 operates as described below with reference to Figs. 2 and 3 which are timing charts: Fig. 2 represents a case where the field of the still image signal recorded on a magnetic disc is an odd-number field conforming to the NTSC system. Fig. 3 represents a case where the field of the still image signal recorded is an even-number field conforming to the NTSC system.

Referring to Fig. 1, a still image signal which is reproduced by the magnetic head 1 from a magnetic disc (not shown) is amplified by the preamplifier 2. After the preamplifier 2, the still image signal is supplied to the frequency-modulated luminance signal separation circuit 3. At the frequency-modulated luminance signal separation circuit 3, a frequency-modulated luminance signal is separated from the still image signal. The luminance signal thus separated is supplied to the equalizer circuit 4 to have its frequency characteristic compensated, or corrected. After that, the luminance signal is frequency-demodulated by the frequency demodulator 5. As a result, the frequency demodulator 5 produces a reproduced luminance signal "a" which is in a state as shown at a part (a) in Fig. 2 or 3. The reproduced luminance signal "a" is supplied to the 1H delay line 6, the adder 7 and the sync signal separation circuit 10.

The 1H delay line 6 delays by one H period the reproduced luminance signal "a" and produces a delayed luminance signal "k". The delayed luminance signal "k" is supplied to the adder 7 and the change-over switch 8. The adder 7 adds together the reproduced luminance signal "a" which is supplied from the frequency demodulator 5 and the delayed luminance signal "k" which is supplied from the 1H delay line 6 and obtains a mean value of them to form thereby an interpolation luminance signal "j". The interpolation luminance signal "j" is supplied to the change-over switch 8.

At the sync signal separation circuit 10, a sync signal "b" which is as shown at a part (b) in Fig. 2 or 3 is separated in synchronism with the fall of the sync signal included in the reproduced luminance signal "a" supplied from the frequency demodulator 5. The sync signal "b" is supplied to the sync signal generator 11.

The sync signal generator 11 generates a replacement period designating signal "c" which is as shown at a part (c) in Fig. 2 or 3; a replacement sync signal "d" which is as shown at a part (d) in Fig. 2 or 3; a switching control signal "g" which is as shown at a part (g) in Fig. 2 or 3; and a switching control signal "i" which is as shown at a part (i) in Fig. 2 or 3, on the basis of the sync signal "b" which is supplied from the sync signal separation circuit 10 and another signal b' (shown at a part (b') in Fig. 2 or 3) which is formed by removing equalizing pulses from the sync signal "b" by means of a 1/2 H killer circuit, which is composed of a monostable multivibrator, etc. and is disposed within the sync signal generator 11. The replacement period designating signal "c" designates a period for which the sync signal is to be replaced by the sync signal replacing circuit 9. The replacement sync signal "d" is arranged to be used for the sync signal replacing action to be performed by the sync signal replacing circuit 9. The switching control signal "g" is arranged to be used for controlling the switching action of the change-over switch 14 which is disposed within the skew compensation circuit 12. The switching control signal "i" is arranged to be used for controlling the switching action of the change-over switch 8.

As shown in Figs. 2 and 3, the high-level period of the replacement period designating signal "c" indicates a sync signal replacing period. During the high-level period of the switching control signal "g", the change-over switch 14 selects the 1/2-H-delayed luminance signal "f" which is output from the 1/2 H delay line 13 and is as shown at a part (f) in Fig. 2 or 3. The change-over switch 14 selects the luminance signal "e" which is not delayed by the 1/2 H delay line 13 and is as shown at a part (e) in Fig. 2 or 3 while the switching control signal "g" is at a low level. The change-over switch 8 selects the interpolation luminance signal "j" which is output from the adder 7 while the switching control signal "i" is at a high level. While the switching control signal "i" is at a low level, the change-over switch 8 selects the delayed luminance signal "k" which is output from the 1H delay line 6.

Referring to Fig. 2, if the field of the still image signal recorded on the magnetic disc is an odd-number field, in a case where the field of the luminance signal "h" output from the output terminal 15 changes from an odd-number field to an even-number field (see parts (c) to (i) of Fig. 2), the fall timing of the switching control signal "g" is at a point F which is obtained at the 13th rise of the waveform of the sync signal "b" counting the rises of the waveform from a point V which is the start point of the vertical sync signal in the sync signal "b". The rise timing of the above-stated replacement period designating signal "c" is at a point A where the 252nd fall of the waveform of the signal b' is counted from the first rise of the sync signal "b" counted from the point V, i.e., from a point E of the sync signal "b". The fall timing of the replacement period designating signal "c" is at a point C where the fourth rise of the waveform of the sync signal "b" is counted from a point B where the 258th fall of the waveform of the signal b' is counted from the point E.

The level of the switching control signal "i" changes from a high level to a low level at the above-stated point A.

The replacement sync signal "d" is output only during the high-level period of the replacement period designating signal "c". The replacement sync signal "d" is phase-locked to the horizontal sync signal obtained during the low-level period of the replacement period designating signal "c". In a case where the field of the luminance signal "h" output from the output terminal 15 changes from an even-number field to an odd-number field (see parts (c') to (i') of Fig. 2), the rise timing of the switching control signal i' from its low level is at a point F at which the 13th rise of the waveform of the sync signal "b" is counted from the point V which is the start point of the vertical sync signal within the sync signal "b".

Further, the rise timing of the replacement period designating signal c' is at the point A where the 252nd fall of the waveform of the signal b' is counted from the first rise of sync signal "b" counted from the point V, i.e., from the point E of the sync signal "b". The fall timing of the replacement period designating signal c' is at a point D where the fifth rise of the waveform of the sync signal "b" is counted from the point B where the 258th fall of the waveform of the signal b' is counted from the point E. The level of the switching control signal g' changes from a low level to a high level at a point G where the sixth rise of the waveform of the sync signal "b" is counted from the point B.

The replacement sync signal d' is arranged to be output only during the high-level period of the replacement period designating signal c'. The replacement sync signal d' is phase-locked to the horizontal sync signal obtained during the lower-level period of the replacement period designating signal c'.

The phase of the sync signal which is included in the luminance signal output from the output terminal 15 can be prevented from having any discontinuing point, as shown at parts (h) and (h') in Fig. 2, by controlling, at the above-stated timing, the replacement period designating signal "c", the replacement sync signal "d" and the switching control signals "g" and "i" which are output from the sync signal generator 11. Further, the signal shown at the part (h) of Fig. 2 is phase-locked to the sync signal obtained when the field of the luminance signal changes from an odd-number field to an even-number field. The signal shown at the part (h') of Fig. 2 is phase-locked to the sync signal obtained when the field of the luminance signal changes from an even-number field to an odd-number field.

Fig. 3 is a timing chart showing a timing control over the various signals output from the sync signal generator 11 when the field of the still image signal recorded on the magnetic disc is an even-number field. As shown at parts (h) and (h') in Fig. 3, with a pulse counting action performed in the same manner as in the case of Fig. 2, the phase of the sync signal included in the luminance signal output from the output terminal 15 can be prevented from having any discontinuing point. The signal shown at the part (h) of Fig. 3 is synchronized with the sync signal obtained when the field of the luminance signal output from the output terminal 15 changes from an even-number field to an odd-number field. The signal shown at the part (h') of Fig. 3 is synchronized with the sync signal obtained when the field of the luminance signal changes from an odd-number field to an even-number field.

The replacement period designating signal "c" and the replacement sync signal "d" which are generated by the sync signal generator 11 as mentioned in the foregoing are supplied to the sync signal replacing circuit 9. The switching control signal "g" and the switching control signal "i" which are generated also by the sync signal generator 11 are supplied to the change-over switch 14 which is disposed within the skew compensation circuit 12 and to the change-over switch 8, respectively.

The change-over switch 8 selectively supplies the interpolation luminance signal "j" or the delayed luminance signal "k" to the sync signal replacing circuit 9 by performing a switching action on these signals under the control of the switching control signal "i". Then, in accordance with the replacement period designating signal "c" supplied, the sync signal replacing circuit 9 replaces the sync signal included in the luminance signal which is supplied from the change-over switch 8 with the replacement sync signal "d". As a result, a signal which is as shown at a part (e) or (e') in Fig. 2 or 3 is output from the sync signal replacing circuit 9. This signal is then supplied to the 1/2 H delay line 13 and the change-over switch 14 within the skew compensation circuit 12.

The luminance signal which is output from the sync signal replacing circuit 9 is delayed by the 1/2 H delay line 13 and becomes as shown at a part (f) or (f') in Fig. 2 or 3 before the signal is supplied to the change-over switch 14. The change-over switch 14 is then controlled by the switching control signal "g" in such a way as to prevent an occurrence of a discontinuing point in the phase of the sync signal at the time of change-over from an odd-number field to an even-number field or from an even-number field to an odd-number field, as shown at the part (h) or (h') in Fig. 2 or 3, so that an interlacing action can be accomplished always in a normal manner irrespective as to whether the field of the still image signal reproduced from the magnetic disc is an odd-number field or an even-number field.

Figs. 2 and 3 show, by way of example, the operation of the embodiment of Fig. 1 to be performed in a case where the still image signal recorded on the magnetic disc is in conformity to the NTSC color system. However, the embodiment can be made applicable also to a case where the still image signal recorded on the magnetic disc is in conformity to the PAL system by changing the counted values of the points A, B, E and F shown in Figs. 2 and 3.

More specifically, as shown in Figs. 4 and 5, the counted value of the point A of the sync signal b' is changed to "302", the counted value from the point V to the point E of the sync signal b is changed to "2" and the counted value from the point V to the point F is changed to "11" if the still image signal reproduced from the magnetic disc is in conformity to the PAL system instead of the NTSC system. These changes enable the embodiment to likewise prevent a discontinuing point from taking place in phase of the sync signal at the time of change-over from an odd-number field to an even-number field or vice versa, irrespective as to whether the field of the still image signal reproduced from the magnetic disc is an odd-number field or an even-number field, so that an interlacing action can be accomplished in a normal manner.

The arrangement of the embodiment, as described in the foregoing, enables an image signal processing device to keep the continuity of phase of the sync signal included in the image signal unchanged without necessitating any field discriminating action on the image signal.

Fig. 6 shows in outline the arrangement of the reproducing apparatus of an electronic still video system which is arranged according to this invention as a second embodiment thereof.

Referring to Fig. 6, the second embodiment comprises a magnetic head 21 for reproducing a still image signal recorded on a magnetic disc which is not shown; a preamplifier 22 for amplifying the signal reproduced by the magnetic head 21; a frequency-modulated luminance signal separation circuit 23 which is arranged to separate a frequency-modulated luminance signal from the signal output from the preamplifier 22; an equalizer circuit 24 which is arranged to compensate the frequency characteristic of the frequency-modulated luminance signal separated by the frequency-modulated luminance signal separation circuit 23; a frequency demodulator 25 which is arranged to frequency-demodulate the frequency-modulated luminance signal output from the equalizer circuit 24; a sync signal replacing circuit 26 arranged to replace a sync signal which is included in the luminance signal output from the frequency demodulator 25 with a replacement sync signal which is output from a sync signal generator 28 as will be described later herein; a sync signal separation circuit 27 which is arranged to separate the sync signal from the luminance signal output from the frequency demodulator 25; the sync signal generator 28 which is arranged to generate the replacement sync signal to be used at the sync signal replacing circuit 26 and other timing signals of varied kinds in synchronizm with the sync signal separated by the sync signal separation circuit 27; a skew compensation circuit 29 including a 1/2 H delay line 30 which is arranged to delay an input signal by 1/2 H period and a change-over switch 31 which is arranged to select, for every field period, the 1/2-H-delayed signal output from the 1/2 H delay line 30 or a signal which is not delayed; and an output terminal 32 which outputs the luminance signal.

The second embodiment which is arranged as shown in Fig. 6 operates as described below with reference to Figs. 7 and 8 which are timing charts:

Fig. 7 shows the operation performed in a case where the field of the luminance signal output from the output terminal 32 changes from an odd-number field over to an even-number field. Fig. 8 shows a case where the field of the luminance signal changes from an even-number field to an odd-number field.

Referring to Fig. 6, a still image signal which is reproduced by the magnetic head 21 from the magnetic disc (not shown) is amplified by the preamplifier 22. The amplified still image signal is supplied to the frequency-modulated luminance signal separation circuit 23.

The frequency-modulated luminance signal separation circuit 23 then separates a frequency-modulated luminance signal from the amplified image signal. The frequency-modulated luminance signal thus separated is supplied to the equalizer circuit 24 to be subjected to a frequency characteristic compensating process. After the equalizer circuit 24, the luminance signal is frequency-demodulated by the frequency demodulator 25. As a result, a reproduced luminance signal "a" is output from the frequency demodulator 25 in a state as shown at a part (a) in Fig. 7 or 8. The reproduced luminance signal "a" is then supplied to the sync signal replacing circuit 26 and the sync signal separation circuit 27, respectively.

At the sync signal separation circuit 27, a sync signal "b" which is as shown at a part (b) in Fig. 7 or 8 is separated in synchronism with the fall of the sync signal which is included in the reproduced luminance signal "a" output from the frequency demodulator 25. The sync signal "b" is supplied to the sync signal generator 28.

The sync signal generator 28 generates: on the basis of the sync signal "b" supplied from the above-staed sync signal separation circuit 27, a replacement period designating signal "c" for designating a sync signal replacing period in the sync signal replacing circuit 26, as shown at a part (c) of Fig. 7 or 8; a replacement sync signal "d" which is as shown at a part (d) in Fig. 7 or 8 and is to be used for the sync signal replacing action of the sync signal replacing circuit 26; and a switching control signal "g" which is as shown at a part (g) in Fig. 7 or 8 and is to be used for controlling the switching action of the change-over switch 31 which is disposed within the skew compensation circuit 29.

Referring to Figs. 7 and 8, the high-level period of the replacement period designating signal "c" represents the sync signal replacing period. During the high-level period of the switching control signal "g", the change-over switch 31 selects the 1/2-H-delayed luminance signal "f" which is output from the 1/2 H delay line 30 in a state as shown at a part (f) in Fig. 7 or 8. During the low-level period of the switching control signal "g", the switch 31 selects the luminance signal "e" which is not delayed by the 1/2 H delay line 30 and is as shown at a part (e) in Fig. 7 or 8.

The rise timing of the replacement period designating signal "c" is located 11.5 H before the start point G of a vertical sync signal, as shown in the part (b) of Fig. 7 or 8 both for the odd-number and even-number fields. The fall timing of the signal "c" is located 3 H before the start point G of the vertical sync signal, as indicated by a point B at the part (b) of Fig. 7, in a case where the field of the luminance signal changes from an odd-number field to an even-number field. If the field changes from an even-number field to an odd-number field, the fall timing of the signal "c" is located 2.5 H before the start point of the vertical sync signal, as indicated by a point C at the part (b) of Fig. 8.

The replacement sync signal "d" is arranged to be output only during the high-level period of the replacement period designating signal "c". The replacement sync signal "d" is phase-locked to a horizontal sync signal obtained up to a point which is located 12 H before the start point G of the vertical sync signal (see Figs. 7 and 8).

The level of the switching control signal "g" changes from a high level to a low level when the field changes from an odd-number field to an even-number field. The level change-over takes place 6 H after the start point G of the vertical sync signal, as indicated by a point F at the part (b) of Fig. 7. When the field changes from an even-number field to an odd-number field, the level of the signal "g" changes from a low level to a high level. The timing point of the level change-over is 2 H before the start point G of the vertical sync signal, as indicated by a point D at the part (b) of Fig. 8.

The replacement period designating signal "c" and the replacement sync signal "d" which are generated by the sync signal generator 28, as mentioned in the foregoing, are supplied to the sync signal replacing circuit 26. The switching control signal "g" which is generated also by the sync signal generator 28 is supplied to the change-over switch 31 disposed within the skew compensation circuit 29.

At the sync signal replacing circuit 26, the sync signal included in the reproduced luminance signal which is supplied from the frequency demodulator 25 is replaced with the replacement sync signal "d" in accordance with the replacement period designating signal "c". As a result, a signal which is as shown at a part (e) in Fig. 7 or 8 is output from the sync signal replacing circuit 26 and is supplied to the 1/2 H delay line 30 and the change-over switch 31 which are disposed within the skew compensation circuit 29.

The luminance signal which is output from the sync signal replacing circuit 26 is delayed by the 1/2 H delay line 30 to become as shown at the part (f) of Fig. 7 or 8. The delayed luminance signal is then supplied to the change-over switch 31. Then, with the change-over switch 31 controlled by the switching control signal "g", the luminance signal can be output without having any phase discontinuing point taking place in the sync signal included therein at the time of change-over from an odd-number field to an even-number field and vice versa as shown in Figs. 7 and 8. In addition to this advantage, the luminance signal thus output is free from jitters and sways both in the horizontal and vertical directions.

In the foregoing, the second embodiment has been described with respect to the field reproduction in the reproducing apparatus of an electronic still video system. However, the same problem that the phase of the sync signal becomes discontinuous at the time of change-over from an odd-number field to an even-number field and vice versa arises not only in the field reproduction but also sometimes arises even in the case of a frame reproduction in which signals recorded in two tracks on a magnetic disc are alternately reproduced. In the frame reproduction, the problem arises due to discrepancy in magnetic head switch-over timing between a recording operation and a reproducing operation, unevenness of the rotation of the magnetic disc, etc.

In view of this problem, a third embodiment of this invention which is shown in Fig. 9 is arranged to replace a sync signal for a period during which the phase of the sync signal become discontinuous with a sync signal having no discontinuity of phase, so that the frame reproduction can be carried out with the same advantageous effect as the effect attained for the field reproduction.

In Fig. 9, the same component parts as those of the second embodiment shown in Fig. 6 are indicated by the same reference numerals and the details of them are omitted from description.

Fig. 9 shows in outline the arrangement of the reproducing apparatus of an electronic still video system which is arranged according to this invention as the third embodiment thereof. The third embodiment is arranged to reproduce signals by means of magnetic heads 33a and 33b from two tracks formed on a magnetic disc which is not shown. The signals thus reproduced are alternately supplied to a preamplifier 22 through a change-over switch 34 which performs a switching action on these signals to alternately select one of them for every field period. The ensuing parts of operation of the third embodiment are performed similarly to the second embodiment shown in Fig. 6. However, since the frame reproduction requires no skew compensation, the skew compensation circuit 29 of Fig. 6 is omitted from the arrangement of the third embodiment. Therefore, in this case, a reproduced luminance signal which is output from the sync signal replacing circuit 26 is arranged to be output as it is from an output terminal 32.

The arrangement of the embodiment, as described in the foregoing, enables an image signal processing device to output an image signal in which the continuity of phase of the sync signal included therein is retained and no jitters or the like take place there.

## Claims

1. A video signal reproducing device for reproducing a video signal composed of signals of odd-number and even-number fields, comprising:
a) synchronizing signal separating means (10) for receiving a video signal and separating a synchronizing signal included in the received video signal;
b) signal generating means (11) arranged
to receive the synchronizing signal separated by said synchronizing signal separating means,
to remove equalizing pulses from the received synchronizing signal and
to generate a period designating signal for designating, on the basis of a signal obtained by removing said equalizing pulses from the received synchronizing signal, a first period which includes a change-over point at which the odd-number and even-number fields change over, and
a skew compensation process control signal along with a quasi-synchronizing signal which is phase-synchronized with a synchronizing signal representing one of the received synchronizing signals for a period other than the first period designated by said period designating signal;
c) signal change-over output means (9) arranged to receive the video signal and the quasi-synchronizing signal generated by said signal generating means, to output the received video signal for a period other than the first period designated by the period designating signal which is generated by said signal generating means and to output the received quasi-synchronizing signal for the first period designated by the period designating signal which is generated by said signal generating means; and
d) skew compensation process means (12) arranged to receive a signal output from said signal change-over output means, to perform a skew compensation process over the received signal in accordance with said skew compensation process control signal generated by said signal generating means and to output a skew-compensated received signal.

2. A device according to claim 1, further comprising interpolation video signal forming means (6, 7, 8) arranged to form an interpolation video signal by means of the received video signal and to supply the interpolation video signal thus formed as a video signal to said signal change-over output means.

3. A device according to claim 2, wherein said interpolation video signal forming means (6, 7, 8) includes:
a) delay means (6) arranged to delay the received video signal for one horizontal synchronizing period and to output a delayed video signal;
b) adding-and-averaging means (7) arranged to add together and average the delayed video signal output from said delay means and the video signal which is not delayed and to output an averaged video signal; and
c) video signal output means (8) for alternatively outputting the delayed video signal output from said delay means and the averaged video signal output from said adding-and-averaging means for every field period.

4. A device according to claim 1, wherein a video signal which is supplied to said synchronizing signal separating means (10) is obtained by repeatedly reproducing a signal recorded in one of a plurality of tracks which are concentrically formed on a disc-shaped recording medium and in each of which one field amount of said video signal is recorded.

5. A device according to claim 1, wherein a video signal which is supplied to said synchronizing signal separating means (10) is obtained by alternately reproducing signals recorded in two of a plurality of tracks which are concentrically formed on a disc-shaped recording medium and in each of which one field amount of said video signal is recorded.

## Patentansprüche

1. Videosignal-Reproduktionseinrichtung zum Reproduzieren eines Videosignals, das aus geradzahligen und ungeradzahligen Halbbildern zusammengesetzt ist, umfassend:
a) eine Synchronisationssignal-Abtrenneinrichtung (10) zum Empfangen eines Videosignals und Abtrennen eines in dem empfangenen Videosignal enthaltenen Synchronisationssignals;
b) eine Signalerzeugungseinrichtung (11), die angeordnet ist
zum Empfangen des von der Synchronisationssignal-Abtrenneinrichtung abgetrennten Synchronisationssignals,
zum Entfernen von Halbzeilenimpulsen aus dem empfangenen Synchronisationssignal und
zum Erzeugen eines Zeitdauer-Angabesignals zum Angeben, auf der Grundlage eines Signals, das durch Entfernen der Halbzeilenimpulse aus dem empfangenen Synchronisationssignal erhalten wurde, einer ersten Zeitdauer, die einen Wechselpunkt beinhaltet, an dem die ungeradzahligen und geradzahligen Halbbilder wechseln, und eines Verschiebekompensationsprozeß-Steuersignals zusammen mit einem Quasi-Synchronisationssignal, das mit einem Synchronisationssignal phasensynchronisiert ist, welches eines der empfangenen Synchronisationssignale für eine Zeitdauer, die sich von der durch das Zeitdauer-Angabesignal angegebenen ersten Zeitdauer unterscheidet, repräsentiert;
c) eine Signalwechsel-Ausgabeeinrichtung (9), die angeordnet ist zum Empfangen des Videosignals und des durch die Signalerzeugungseinrichtung erzeugten Quasi-Synchronisationssignals, um das empfangene Videosignal für eine Zeitdauer, die sich von der durch das Zeitdauer-Angabesignal, das durch die Signalerzeugungseinrichtung erzeugt wird, angegebenen ersten Zeitdauer unterscheidet, auszugeben, und um das empfangene Quasi-Synchronisationssignal für die erste Zeitdauer, die durch das Zeitdauer-Angabesignal, das durch die Signalerzeugungseinrichtung erzeugt wird, angegeben wird, auszugeben; und
d) eine Verschiebekompensationsprozeß -Einrichtung (12), angeordnet zum Empfangen eines von der Signalwechsel-Ausgabeeinrichtung ausgegebenen Signals, um einen Verschiebekompensationsprozeß über das empfangene Signal in Übereinstimmung mit dem Verschiebekompensationsprozeß-Steuersignal, das durch die Signalerzeugungseinrichtung erzeugt wird, durchzuführen und um ein verschiebekompensiertes empfangenes Signal auszugeben.

2. Einrichtung nach Anspruch 1, ferner umfassend eine Interpolationsvideosignal-Bildungseinrichtung (6, 7, 8), angeordnet zum Bilden eines Interpolationsvideosignals mittels dem empfangenen Videosignal und zum Zuführen des auf diese Art und Weise gebildeten Interpolationsvideosignals zu der Signalwechsel-Ausgabeeinrichtung.

3. Einrichtung nach Anspruch 2, bei der die Interpolationsvideosignal-Bildungseinrichtung (6, 7, 8) beinhaltet:
a) eine Verzögerungseinrichtung (6), angeordnet zum Verzögern des empfangenen Videosignals um eine horizontale Synchronisationsperiode und zum Ausgeben eines verzögerten Videosignals;
b) eine Addier- und Mittelwertbildungseinrichtung (7), angeordnet zum Addieren und Mitteln des verzögerten Videosignals, das durch die Verzögerungseinrichtung ausgegeben wird, und des Videosignals, das nicht verzögert ist, und zum Ausgeben eines gemittelten Videosignals; und
c) eine Videosignal-Ausgabeeinrichtung (8) zum abwechselnden Ausgeben des verzögerten Videosignals, das durch die Verzögerungseinrichtung ausgegeben wird, und des gemittelten Videosignals, das durch die Addier- und Mittelwertbildungseinrichtung ausgegeben wird, für jedes Halbbild.

4. Einrichtung nach Anspruch 1, bei der ein Videosignal, welches der Synchronisationssignal-Abtrenneinrichtung (10) zugeführt wird, erhalten wird durch wiederholtes Reproduzieren eines Signals, das in einer Vielzahl von Spuren aufgezeichnet ist, die konzentrisch auf einem scheibenförmigen Aufzeichnungsmedium ausgebildet sind und bei welchen in jeder derselben ein Halbbild des Videosignals aufgezeichnet ist.

5. Einrichtung nach Anspruch 1, bei der ein Videosignal, welches der Synchronisationssignal-Abtrenneinrichtung (10) zugeführt wird, erhalten wird durch abwechselndes Reproduzieren von Signalen, die in zweien von einer Vielzahl von Spuren aufgezeichnet sind, die konzentrisch auf einem scheibenförmigen Aufzeichnungsmedium ausgebildet sind und bei welchen in jeder derselben ein Halbbild des Videosignals aufgezeichnet ist.

## Revendications

1. Un dispositif de reproduction de signal vidéo pour reproduire un signal vidéo constitué de signaux de nombres de champs à nombre impair et à nombre pair, comprenant :
(a) des moyens de séparation de signal de synchronisation (10) destinés à recevoir un signal vidéo et à séparer un signal de synchronisation inclus dans le signal vidéo reçu;
(b) des moyens de génération de signal (11), agencés
pour recevoir le signal de synchronisation, séparé par lesdits moyens de séparation de signal de synchronisation,
pour éliminer les impulsions d'égalisation issues du signal de synchronisation reçu, et
pour générer un signal de désignation de période destiné à désigner, sur la base d'un signal obtenu par l'élimination desdits impulsions d'égalisation à partir du signal de synchronisation reçu, une première période qui comprend un point de changement auquel les champs à nombre impair et à nombre pair sont permutés, et
un signal de commande de processus de compensation de défaut d'alignement, avec un signal de quasi-synchronisation qui est synchronisé en phase avec un signal de synchronisation représentant l'un des signaux de synchronisation reçus pour une période autre que la première période désignée par ledit signal de désignation de période;
(c) des moyens de sortie de changement de signal (9), agencés pour recevoir le signal vidéo et le signal de quasi-synchronisation généré par lesdits moyens de génération de signal, afin d'envoyer ledit signal vidéo reçu pendant une période autre que la première période désignée par le signal de désignation de période généré par lesdits moyens de génération de signal et pour envoyer le signal de quasi-synchronisation reçu pour la première période désignée par le signal de désignation de période qui est généré par lesdits moyens de génération de signal; et
(d) des moyens de traitement de compensation de défaut d'alignement (12), agencés pour recevoir une sortie de signal venant desdits moyens de sortie de permutation de signal, afin d'effectuer un processus de compensation de défaut d'alignement sur le signal reçu, en fonction dudit signal de commande de processus de compensation de défaut d'alignement, généré par lesdits moyens de génération de signal, et pour envoyer un signal reçu, à compensation de défaut d'alignement.

2. Un dispositif selon la revendication 1, comprenant en outre des moyens de formation de signal vidéo d'interpolation (6, 7, 8), agencés pour former un signal vidéo d'interpolation au moyen du signal vidéo reçu et pour fournir le signal vidéo d'interpolation ainsi formé, à titre de signal vidéo, auxdits moyens de sortie de permutation de signal.

3. Un dispositif selon la revendication 2, dans lequel lesdits moyens de formation de signal vidéo d'interpolation (6, 7, 8) comprennent :
(a) des moyens de retard (6), agencés pour retarder le signal vidéo reçu pendant la durée d'une période de synchronisation horizontale et pour envoyer un signal vidéo retardé;
(b) des moyens d'addition et de formation de moyenne (7), agencés pour ajouter ensemble et former la moyenne du signal vidéo retardé, envoyé par lesdits moyens de retardement, et du signal vidéo qui n'est pas retardé, et pour envoyer un signal vidéo soumis à une formation de moyenne; et
(c) des moyens d'envoi de signal vidéo (8) destinés à envoyer alternativement le signal vidéo retardé envoyé par lesdits moyens de retardement et le signal vidéo soumis à une formation de moyenne envoyé par lesdits moyens d'addition et de formation de moyenne pour chaque période de champ.

4. Un dispositif selon la revendication 1, dans lequel un signal vidéo, qui est fourni auxdits moyens de séparation de signal de synchronisation (10), est obtenu en reproduisant répétitivement un signal enregistré dans l'une parmi une pluralité de pistes qui sont formées concentriquement sur un milieu d'enregistrement en forme de disque et dans chacune desquelles est enregistrée une quantité de champ dudit signal vidéo.

5. Un dispositif selon la renvendication 5, dans lequel un signal vidéo, qui est fourni auxdits moyens de séparation de signal de synchronisation (10), est obtenu en reproduisant alternativement des signaux enregistrés dans deux parmi une pluralité de pistes qui sont formées concentriquement sur un milieu d'enregistrement en forme de disques et dans chacune desquelles est enregistrée une quantité de champ dudit signal vidéo.
